# FASCICULE DE BREVET EUROPEEN

(11) **EP 3 687 657 B1**
(45) Date de publication et mention de la délivrance du brevet: **23.11.2022**
(21) Numéro de dépôt: 18769739.6
(22) Date de dépôt: 24.09.2018
(51) Int. Cl.: B01D 45/12, B01D 45/14, B01D 46/00, F04C 29/02, F01M 13/04

(54) **PIÈCE POUR DÉGAZEUR CENTRIFUGE DE TURBOMACHINE ET PROCÉDÉ DE FABRICATION DE LADITE PIÈCE**
BAUTEIL FÜR EINE ZENTRIFUGALE TRENNVORRICHTUNG EINES MOTORS UND VERFAHREN ZU SEINER HERSTELLUNG
PIECE FOR CENTRIFUGAL SEPARATOR OF AN ENGINE AND PROCESS OF MAKING SAME

(30) Priorité: 26.09.2017 FR 1758909
(43) Date de publication de la demande: 05.08.2020
(73) Titulaire: Safran Helicopter Engines, 64510 Bordes (FR)
(72) Inventeur: NIFENECKER, Arnaud, 77550 Moissy-Cramayel (FR); FULLERINGER, Benjamin, 77550 Moissy-Cramayel (FR); LEMPEGNAT, Cédric, 77550 Moissy-Cramayel (FR); JOUSSELIN, Samuel, 77550 Moissy-Cramayel (FR); GAYMU, Pierre, 77550 Moissy-Cramayel (FR); GEORGET, Cédric, 77550 Moissy-Cramayel (FR); LANQUETIN, Rémi, 77550 Moissy-Cramayel (FR); OLHARAN, Philippe, 77550 Moissy-Cramayel (FR)
(74) Mandataire: Gevers & Orès
(86) Numéro de dépôt international: PCT/EP2018/075741
(87) Numéro de publication internationale: WO 2019/063458

(56) Documents cités:
- EP-A1- 0 780 546
- EP-A1- 2 352 908
- WO-A2-02/36240
- FR-A1- 2 299 898
- US-A1- 2014 182 253

## Description

### 1. Domaine technique de l'invention

L'invention concerne un dégazeur centrifuge de turbomachine.

### 2. Arrière-plan technologique

L'état de la technique comprend notamment les documents WO-A2-0236240, FR-A1-2 299 898, EP-A1-0 780 546 et EP-A1-2 352 908.

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisés aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite d'accessoires, etc. Or, cet air ayant transité par différentes zones de la turbomachine, il est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entrainé par une prise de puissance mécanique au niveau de la boite d'accessoires ou du réducteur de la turbomachine.

De manière connue, un tel dégazeur centrifuge comprend une ou plusieurs enceinte(s) de séparation centrifuge du mélange air/huile agencée(s) autour d'un arbre creux et délimitée(s) par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite d'accessoires ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Certains dégazeurs, tel celui décrit dans la demande WO-A1-2011004023, comprennent en outre des filtres agencés dans l'enceinte du dégazeur pour améliorer le captage des gouttes d'huile et favoriser ainsi le déshuilage du mélange. En effet, les filtres augmentent la surface de contact disponible et améliorent donc la probabilité qu'une goutte d'huile transportée par le flux de mélange soit accrochée à une paroi. Ces filtres sont en général formés d'une mousse métallique, telle qu'une mousse commercialisée sous la dénomination Retimet^{®}.

Cependant les performances des dégazeurs connus sont en général handicapées par des pertes de charge internes qui sont dues à deux causes en particulier, les formes de la veine, comprenant l'enceinte de centrifugation, empruntée par le flux d'air en cours de déshuilage, et la présence de la mousse métallique.

En ce qui concerne les formes internes au dégazeur délimitant la veine empruntée par le flux d'air, le procédé de fabrication peut alors être limitant quant au potentiel de géométrie optimale à réaliser.

En ce qui concerne, la présence de mousse métallique, les pertes de charge sont dues au fait qu'à haute vitesse (par exemple pour des vitesses de l'ordre de 6000 tours/min), la surface frontale constituée par la mousse métallique agit comme un mur et le degré de pénétration des particules d'air dans la mousse est faible. De ce point de vue, les procédés de fabrication connus, intégrant par exemple une mousse déterminée, ne permettent pas le pilotage de la géométrie de la structure.

Il est alors complexe de trouver un couple solution technologique / moyen de production compatible des deux aspects que sont la minimisation des pertes et l'optimisation de la capacité de déshuilage. Les solutions trouvées sont alors des compromis entre ces deux aspects, et non pas un optimum pour les deux.

A titre d'exemple, la fonderie permet la génération de formes complexes, limitant les pertes de charge mais rend l'intégration de mousses métalliques complexes ou en dégradent le gain.

Selon un autre exemple, l'usinage conventionnel permet d'intégrer des mousses métalliques mais limite les libertés dans la génération de formes de veine d'air et multiplie le nombre de références de pièces. Dans ce cas, la forme de l'enceinte peut ne pas être optimale pour les pertes de charge et les choix de géométrie de la structure de mousse logée dans l'enceinte pour favoriser l'écoulement d'air qui les traverse peuvent être limités par les accès aux espaces intérieurs.

Il existe donc un besoin de concevoir un dégazeur avec un procédé de fabrication permettant à la fois, d'avoir un certain de degré de liberté quant aux géométries choisies pour faire circuler le flux d'air en cours de déshuilage et d'intégrer simplement une structure type « mousse métallique » à même d'augmenter le taux de captage de gouttelettes d'huile.

### 3. Objectifs de l'invention

L'invention vise à fournir une conception de dégazeur répondant au besoin précité, pour obtenir un dégazeur centrifuge de turbomachine qui présente des performances améliorées par rapport aux dégazeurs connus.

L'invention vise également à fournir un dégazeur dans lequel la structure de la mousse est telle qu'elle maximise le nombre de gouttelettes captées en minimisant les pertes de charge afférentes.

### 4. Exposé de l'invention

Pour ce faire, l'invention concerne une pièce pour un dégazeur centrifuge d'un mélange air/huile de turbomachine, destinée à tourner autour d'un axe de symétrie, comprenant une partie structurelle configurée pour délimiter une veine pour le flux dudit mélange, comportant :
- au moins une entrée axiale annulaire dudit mélange air/huile et une sortie radiale interne annulaire, plus proche de l'axe de symétrie que l'entrée axiale et configurée pour évacuer l'air déshuilé ;
- une enceinte de centrifugation circonférentielle s'étendant axialement entre une première extrémité comprenant ladite entrée axiale et une seconde extrémité communiquant avec ladite sortie radiale interne ;
- au moins une sortie radiale d'huile ménagée dans une paroi radialement extérieure, sensiblement annulaire, de l'enceinte de centrifugation et configurée pour pouvoir évacuer l'huile séparée dudit mélange par centrifugation vers l'extérieur du dégazeur.

La pièce comprend en outre au moins une structure alvéolaire, par exemple une mousse ou un treillis, configurée pour filtrer l'huile en laissant passer l'air et occupant au moins un espace dans ladite veine qui ferme la communication entre l'entrée axiale et la sortie radiale interne.

Ladite pièce est caractérisée en ce que la partie structurelle et la structure alvéolaire sont formées d'une seule pièce.

Dans la présente demande, on entend par deux pièces ou parties « formées d'une seule pièce », le fait que ces deux pièces ou parties sont monoblocs, c'est-à-dire reliées physiquement entre elles et non dissociables sans les détériorer.

On notera que la partie structurelle et la structure alvéolaire sont formées d'une seule pièce mais ne sont pas nécessairement de la même matière. En particulier, le matériau poreux de la structure alvéolaire peut être métallique ou non métallique. Il est en effet envisageable de considérer une application en plastique de ce composant, puisque dans les boîtes accessoires, tout du moins de turbines pour hélicoptère, ils sont utilisés à des vitesses de rotation acceptables d'un point de vue centrifuge mais également à des températures dites « froides » (<200°C).

La structure alvéolaire est composée d'un matériau poreux qui permet de former une surface de contact potentiel importante avec le mélange air/huile. Cela permet d'améliorer la probabilité de capter une particule d'huile qui est ensuite centrifugée hors du dégazeur. Le matériau poreux peut former une mousse, ayant une géométrie aléatoire. Préférentiellement, le matériau forme un treillis (ou « lattice » en Anglais), présentant un motif répétitif. La structure alvéolaire fait office de filtre. En outre, l'effet centrifuge permet d'éviter la saturation dudit filtre par l'évacuation continue des gouttes d'huiles accrochées au filtre.

Les inventeurs ont réalisé que le fait de réaliser une pièce dans laquelle la partie structurelle et la structure alvéolaire sont formées d'une seule pièce, par exemple par fabrication additive, permet d'optimiser à la fois les formes de la partie structurelle, pour diriger le flux du fluide qui la traverse afin de minimiser les pertes de charge, et d'intégrer facilement une structure alvéolaire qui vienne se loger dans l'espace adéquat de la veine, pour améliorer les performances de séparation de l'huile et de l'air. De plus, la fabrication d'une seule pièce permet plus de liberté sur la structure de la mousse métallique. On peut s'affranchir d'utiliser des mousses prédéfinies sur catalogue.

Un espace libre de matériau s'étend axialement dans l'enceinte de centrifugation entre l'entrée axiale et l'espace occupé par la structure alvéolaire, ledit espace occupé par la structure alvéolaire s'étendant au moins partiellement à l'intérieur de l'enceinte de centrifugation.

L'espace libre de matériau favorise l'aspiration du mélange air/huile à séparer et contribue à la séparation des gouttes de fort diamètre, tandis que l'espace garni de structure alvéolaire favorise le captage des particules d'huile restantes à évacuer par les sorties axiales d'huile de la paroi externe de l'enceinte de centrifugation. En d'autres termes, la structure alvéolaire ne comble pas intégralement l'enceinte de centrifugation dans laquelle s'exerce principalement la force centrifuge lorsque le dégazeur fonctionne, mais uniquement un espace en fin de l'enceinte de centrifugation. Le premier espace au voisinage de l'entrée axiale de mélange est laissé libre de matériau poreux.

Cette architecture particulière permet que le mélange air/huile entre dans la pièce par l'entrée axiale et circule axialement dans l'espace libre de matériau sans pertes de charge notables. Dans ce premier espace, une première phase de déshuilage est effectuée par le déplacement des gouttes d'huile de grand diamètre vers la périphérie de l'enceinte de centrifugation sous l'effet de la force centrifuge. Le matériau poreux de la structure alvéolaire est ensuite attaqué axialement par l'air et les gouttes d'huile restantes (i.e. de plus petit diamètre), limitant ainsi les pertes de charge. Les gouttes d'huile captées par le matériau poreux sont ensuite centrifugées vers la périphérie de l'enceinte de centrifugation.

De préférence, la partie structurelle comprend une première coque de révolution entourée par une deuxième coque de révolution formant respectivement des parois circonférentielles intérieures et extérieures de la veine, la deuxième coque comprenant une première partie, formant la paroi radialement extérieure de l'enceinte de centrifugation, et une deuxième partie sensiblement radiale, définissant une limite axiale de la veine opposée à ladite entrée axiale.

Préférentiellement, la première coque comporte une extrémité axiale opposée à l'entrée axiale qui ménage, avec la deuxième partie de la deuxième coque, une sortie vers l'axe de symétrie au niveau de la seconde extrémité de l'enceinte de centrifugation et qui est conformée, par exemple en bourrelet ou en plateau circonférentiel arrondi, de manière à maintenir le plus longtemps possible le mélange air/huile sur les plus grands diamètres de la veine.

Cela permet de bénéficier de l'effet centrifuge le plus important et donc d'améliorer le niveau de performance de la séparation air/huile.

Encore plus préférentiellement, l'espace occupé par la structure alvéolaire s'étend entre une première surface transversale à la veine joignant la première coque à la paroi radialement extérieure dans l'enceinte de centrifugation et une deuxième surface transversale à la veine joignant la deuxième partie de la deuxième coque et la première coque au niveau de son extrémité axiale opposée à l'entrée axiale.

Avantageusement, les première et seconde surfaces présentent chacune une inclinaison principale par rapport à un plan transverse à l'axe de symétrie d'un angle compris entre 0° et 45°, les valeurs positives correspondant au fait que la face s'écarte de l'entrée axiale en s'éloignant de la première coque.

La structure alvéolaire peut ainsi être placée dans l'espace juste suffisant pour arrêter les gouttes d'huile sans introduire de perte de charge inutile.

Avantageusement, la partie structurelle comprend des cloisons sensiblement axiales reliant la première et la deuxième coque, réparties circonférentiellement et séparant la veine en une pluralité de compartiments agencés radialement autour de l'axe de symétrie, chaque compartiment communiquant avec l'entrée axiale, la sortie radiale interne et au moins une sortie radiale d'huile.

Selon ce mode de réalisation, l'enceinte de centrifugation est divisée en une pluralité de compartiments, chaque compartiment étant relié à l'entrée axiale du mélange pour pouvoir être alimenté en mélange, à une ou plusieurs sortie(s) radiale(s) d'huile pour pouvoir évacuer l'huile en dehors du dégazeur, et à la sortie radiale interne pour pouvoir évacuer l'air déshuilé vers l'arbre creux. Ces compartiments sont uniformément répartis autour de l'axe de symétrie. Cela permet d'améliorer le déshuilage du mélange en formant une pluralité de sous-enceintes centrifuges de séparation du mélange.

La partie structurelle peut comprendre des éléments reliant la première et la deuxième coque dans une deuxième partie de la veine mettant l'enceinte de centrifugation en communication avec la sortie radiale interne, lesdits éléments étant configurés pour servir de support entre les deux coques au cours d'une fabrication additive de la pièce et pour favoriser l'écoulement de l'air déshuilé dans la deuxième partie de la veine.

Dans cette variante, la présence de ces éléments support, par exemple des voûtes, permet de transformer une contrainte liée à la fabrication additive, telle que le fait d'empêcher une partie de la deuxième coque de s'effondrer en cours de fabrication, en un avantage sur le plan de l'amélioration des pertes de charge dans la veine.

Avantageusement, la porosité et/ou la texture de la structure alvéolaire varie axialement et/ou radialement dans l'espace qu'elle occupe, de manière à uniformiser les pertes de charge entre les zones proches de la première coque, peu soumises à la force centrifuge, et les zones proches de la paroi radialement extérieure, fortement soumises à la force centrifuge, et/ou à optimiser l'évacuation des gouttelettes captées par la structure alvéolaire vers une sortie radiale d'huile.

En particulier, en ce qui concerne la texture, la structure alvéolaire peut former un treillis dont les caractéristiques de densité et/ou de motif varient axialement et/ou radialement dans l'espace.

Compte tenu de l'architecture d'une pièce selon l'invention, le chemin le plus court pour l'air entre l'entrée et la sortie d'air déshuilé est celui passant à la base de la structure alvéolaire, c'est-à-dire au voisinage de l'axe de symétrie. L'air a donc tendance à passer par cette partie basse, qui est en outre, moins soumise à la force centrifuge que les parties proches de la périphérie de l'enceinte. Pour limiter ce phénomène, les variations de porosité et/ou de texture permettent de mieux répartir le passage d'air et d'uniformiser les pertes de charge. Le flux est alors mieux réparti et les vitesses du mélange sont plus homogènes. L'huile qui remonte dans la structure alvéolaire a également tendance à former des gouttes de plus en plus grosses, ce qui augmente la concentration d'huile dans le matériau poreux de la structure au voisinage de la périphérie de l'enceinte. La forme du l'espace occupé par la structure alvéolaire, évoquée précédemment, permet également de faciliter le drainage de l'huile contenu dans la structure alvéolaire.

L'invention concerne aussi un dégazeur centrifuge d'un mélange air/huile de turbomachine comprenant une pièce telle que décrite précédemment, un arbre creux solidaire de ladite pièce et configuré pour recueillir l'air sortant de la sortie radiale interne, et un pignon de mise en rotation de l'ensemble.

L'invention concerne en outre un procédé de réalisation d'une telle pièce, comprenant une phase de fabrication additive simultanée de la partie structurelle et de la structure alvéolaire.

La fabrication additive, par exemple par fusion laser d'une poudre métallique ou l'impression tridimensionnelle avec des matériaux différents, permet de créer les formes complexes décrites pour la pièce selon l'invention en faisant en sorte que la structure alvéolaire puisse avoir une composition évolutive dans l'espace et épouse les formes de la veine délimitée par les parties structurelles.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective et coupée selon un plan de symétrie d'un dégazeur selon un mode de réalisation de l'invention,
- la figure 2 est une vue schématique partielle en perspective et coupée selon un plan de symétrie d'une pièce fabriquée selon l'invention pour le dégazeur de la figure 1,
- les figures 3a à 3d montrent différentes réalisations de structures alvéolaires possibles pour la partie de la pièce indiquée dans un rectangle de la figure 1 ;
- la figure 4a montre une perspective éclatée de la partie structurelle de la pièce de la figure 2 sans prendre en compte les contraintes de fabrication ; et
- la figure 4b montre une perspective éclatée de la partie structurelle de la pièce de la figure 2 en prenant en compte les contraintes de fabrication.

### 6. Description détaillée d'un mode de réalisation de l'invention

Sur les figures, les échelles et les proportions ne sont pas strictement respectées et ce, à des fins d'illustration et de clarté.

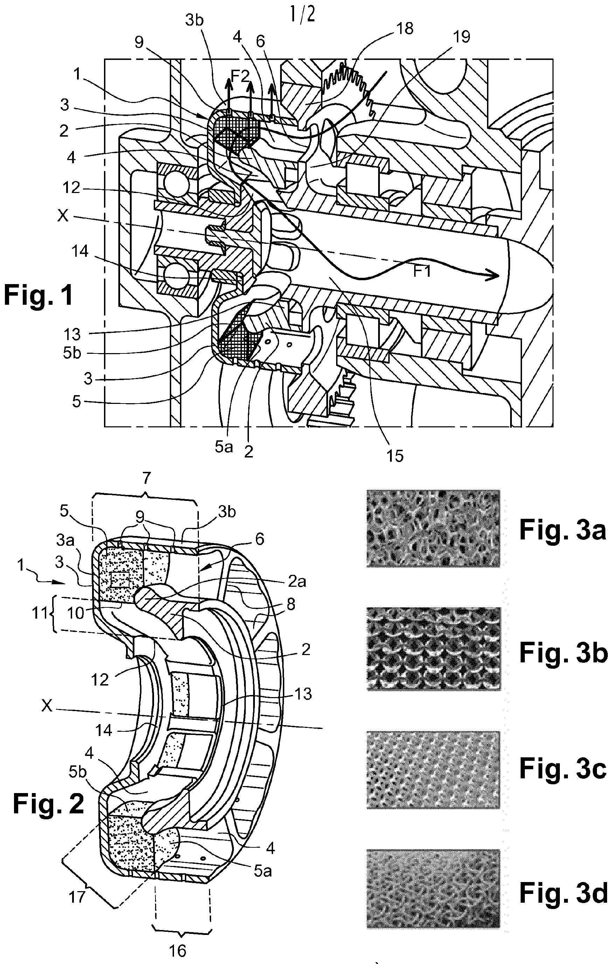

Un dégazeur utilisant l'invention comprend, tel que représenté sur la figure 1, une pièce mobile 1 en rotation autour d'un axe central de symétrie X. Comme cela est montré plus en détail sur la figure 2, ladite pièce mobile 1 comporte une partie structurelle qui comprend une première coque 2 entourée d'une deuxième coque 3. L'espace entre les deux coques 2, 3, forme une veine 4 de révolution autour de l'axe central de symétrie X, destinée à faire circuler le mélange d'air et d'huile à séparer.

Ladite pièce 1 comporte en outre une ou plusieurs structures alvéolaires 5 de type mousse métallique, destinées à filtrer les plus fines gouttelettes d'huile.

Les inventeurs ont eu l'idée de recourir à un procédé de fabrication additive simultanée de la parie structurelle 2,3, et de la structure alvéolaire 5 pour à la fois obtenir un certain de degré de liberté quant aux géométries choisies pour faire circuler le flux d'air et intégrer simplement une structure alvéolaire à même d'augmenter le taux de captage de gouttelettes d'huile. La fabrication additive de l'ensemble peut se faire, de manière connue par un procédé de fusion laser contrôlée d'une poudre métallique.

Un mode de réalisation d'une pièce par ce type de procédé est présenté ci-après en référence à la figure 2.

La veine 4 comporte une entrée axiale 6 destinée à l'entrée du mélange d'air et d'huile à séparer. Cette entrée axiale 6 correspond à une première extrémité d'une première partie 7 de la veine 4 qui s'étend essentiellement de manière axiale, en vue de centrifuger le mélange. La première partie de veine 7, qui s'étend axialement, fait office d'enceinte de centrifugation car c'est là que la force centrifuge s'exerce avec le plus de force sur le mélange air/huile. Elle est donc appelée enceinte de centrifugation 7 dans la suite de la description.

La veine comprend ici en outre une pluralité de compartiments répartis circonférentiellement autour de l'axe de symétrie. Les compartiments sont formés par des cloisons axiales 8. Avantageusement, ces cloisons axiales 8 relient la première 2 et la deuxième coque 3, formant ainsi une liaison qui les solidarise. Chaque compartiment communique avec l'entrée axiale 6 du mélange. Les cloisons axiales 8 forment des ailettes qui entraînent en rotation le mélange entrant dans les compartiments adjacents.

A sa deuxième extrémité axiale, l'enceinte de centrifugation 7 est fermée axialement par une portion 3a de la deuxième coque 3, sensiblement perpendiculaire à l'axe de symétrie X, et comporte une ouverture radiale 10 vers l'axe de symétrie X entre la première 2 et la deuxième coque 3. La deuxième coque 3 forme une paroi 3b radialement externe de l'enceinte de centrifugation 7 qui est sensiblement annulaire, entre l'entrée 6 et la partie 3a de la deuxième coque qui limite axialement l'enceinte de centrifugation 7 à sa seconde extrémité. L'enceinte de centrifugation 7 comporte une pluralité de sorties radiales 9 d'huile ménagée dans la paroi radialement externe 3b et est configurée pour pouvoir évacuer l'huile séparée du mélange par l'effet de la force centrifuge du dégazeur. Chaque compartiment de la veine 4 est relié à une ou plusieurs sortie(s) radiale(s) 9 d'huile.

La première coque 2 forme une paroi radialement interne des compartiments de la veine dans l'enceinte de centrifugation 7. Elle s'arrête axialement avant la portion axiale 3a de la deuxième coque 3, en partant de l'entrée 6 de la veine pour ménager l'ouverture radiale 10 vers l'intérieur à la seconde extrémité de l'enceinte de centrifugation 7. Sa forme peut être optimisée pour favoriser la séparation de l'huile et pour minimiser les pertes de charge, notamment au niveau du coude formé au niveau de la sortie radiale. Sur l'exemple présenté, la paroi radialement interne est sensiblement annulaire en partant de l'entrée axiale 6 et comporte une extrémité axiale 2a opposée à l'entrée axiale 6 formant un bourrelet ou un plateau circonférentiel arrondi au niveau de la seconde extrémité de l'enceinte de centrifugation 7. Cette forme de l'extrémité axiale 2a de la première coque a tendance à renvoyer le fluide radialement vers l'extérieur au passage du coude formé dans la veine 4 en sortie de l'enceinte de centrifugation, de manière à optimiser l'écoulement du flux mélange air/huile.

La veine comporte une deuxième partie 11 qui communique avec l'enceinte de centrifugation 7 par l'ouverture radiale 10 entre la première 2 et la deuxième 3 coques et qui est configurée pour guider le fluide vers une sortie radiale 12 dans un espace cylindrique vide, qui s'étend axialement entre les limites de l'enceinte de centrifugation 7. La première 2 et la deuxième 3 coque forment des colliers 13, 14, qui limitent ledit espace cylindre vide. Ces colliers 13, 14 sont configurés pour relier la pièce 1 à un arbre 15, représenté sur la figure 1, qui entraîne la pièce en rotation.

Ici, la deuxième coque 3 forme un fond sensiblement transversal externe sur lequel la pièce 1 peut reposer lors du procédé de fabrication additive. La section de la veine 4 selon un plan longitudinal a une forme coudée optimisée pour guider l'air déshuilé vers la sortie radiale interne 12.

Selon l'invention, la pièce comporte en outre au moins une structure alvéolaire 16 dans chaque compartiment.

Avantageusement, les structures alvéolaires 5 ne s'étendent pas intégralement dans les compartiments de la veine 4. Sur l'exemple présenté, elles s'étendent principalement dans l'enceinte de centrifugation 7 de manière à former deux espaces distincts successifs dans le compartiment : un espace libre 16 de matériau alvéolaire s'étendant uniquement dans l'enceinte de centrifugation 7 et un espace garni 17 de matériau alvéolaire. L'espace libre 16 de matériau alvéolaire est alimenté en mélange par l'ouverture du compartiment sur l'entrée axiale 6 et il débouche dans l'espace garni 17 de matériau alvéolaire. L'espace garni 17 de matériau alvéolaire débouche dans la deuxième partie 11 de la veine. L'espace libre 16 de matériau alvéolaire présente ainsi une fonction centrifuge simple du dégazeur permettant au mélange huile/air de pénétrer dans la veine 4 du dégazeur, puis de se déplacer axialement dans un repère tournant. Au cours de ce déplacement, une première phase de déshuilage est réalisée. L'espace garni 17 de matériau alvéolaire présente une fonction de captage des gouttes d'huile non extraites au cours de la première phase. Cette deuxième phase de déshuilage est en outre réalisée dans l'espace garni 17 de matériau alvéolaire sans pertes de charge notables du fait de l'attaque axiale des gouttes d'huile. De plus, la séparation de l'enceinte de centrifugation entre un espace libre 16 de matériau alvéolaire et un espace garni 17 de matériau alvéolaire permet d'éviter la saturation du matériau de l'espace garni 17 de matériau alvéolaire par une première phase de déshuilage dans l'espace libre 16 de matériau alvéolaire. Les inventeurs ont réalisé que cette architecture permet de fournir des résultats qui allient les faibles pertes de charge des dégazeurs totalement libres de matériau alvéolaire et la bonne séparation des dégazeurs totalement garnis de matériau alvéolaire. En d'autres termes, les deux espaces coopèrent pour fournir un résultat qui va au-delà de la somme des résultats de chacun des deux espaces pris individuellement.

En outre, avec le procédé de fabrication additive, il est possible de choisir la géométrie de l'espace garni 17 par la structure alvéolaire pour maximiser sa fonction de filtre. Dans le mode de réalisation illustré sur la figure 2, cet espace 17 contourne le coude à la fin de l'enceinte de centrifugation 7. Ici, il est délimité, du côté de l'entrée axiale 6 par une section de veine s'étendant radialement dans l'enceinte de centrifugation entre les deux coques 2, 3, et, du côté de la sortie radiale interne 12 par une section de veine s'étendant principalement axialement entre la portion 3a sensiblement axiale de la deuxième coque 3 et l'extrémité axiale 2a de la première coque 2, formant un bourrelet de contournement. Il peut aussi s'étendre radialement vers l'intérieur de la deuxième partie 11 de veine en suivant les contours de la paroi extérieure 3a et de la paroi intérieure 2. La structure alvéolaire 5 peut ainsi être placée dans l'espace juste suffisant pour arrêter les gouttes d'huile sans introduire de perte de charge inutile.

L'exemple de la figure 2, montrant l'espace 17 garni par la structure alvéolaire délimité entre une première face 5a sensiblement radiale et une deuxième face 5b sensiblement perpendiculaire à un plan radial, n'est pas limitatif. La figure 1 montre une variante dans laquelle la deuxième face 5b est inclinée par rapport à un plan perpendiculaire à l'axe de symétrie X.

D'autres variantes sont envisageables. Les inventeurs préconisent que les première 5a et seconde 5b faces soient inclinées par rapport à un plan perpendiculaire à l'axe de symétrie X d'un angle variant entre 0° et 45°, les valeurs positives correspondant au fait que la face 5a, 5b s'écarte de l'entrée axiale 6 en s'éloignant de la première coque 2.

L'extension de l'espace 17 et l'orientation des premières 5a et deuxième 5b faces font partie, au même titre que les choix d'évolution spatiale de la texture de la structure alvéolaire 5, de la pratique de l'homme du métier pour optimiser la fonction de filtrage de l'huile. On notera que les première 5a et deuxième 5b faces résultant de cette optimisation ne sont pas forcément parallèles l'une par rapport à l'autre.

De plus, comme illustré sur les figures 2 et 3a à 3d, le procédé de fabrication additive permet de faire varier la texture et la porosité de la structure alvéolaire, radialement et axialement. La porosité peut être faible comme sur la figure 3c ou plus forte comme sur les figures 3a ou 3b. La porosité variable permet d'uniformiser les pertes de charge entre les zones proches de la paroi interne 2, peu soumises à la force centrifuge, et les zones proches de la paroi externe 3, fortement soumises à la force centrifuge. Les gouttes d'huile sont captées par la structure alvéolaire et se déplacent vers la périphérie du dégazeur du fait de la force centrifuge résultant de la mise en rotation de la pièce 1. En revanche, l'air déshuilé est naturellement évacué vers la sortie radiale interne de chaque compartiment.

Selon des modes de réalisation illustrés sur les figures 3a à 3d, la texture peut aussi varier radialement et/ou axialement. La texture peut correspondre à une structure en treillis, avec des entrelacements de fibres réguliers comme sur les figures 3b à 3d ou irréguliers comme sur la figure 3a. Les entrelacements irréguliers peuvent être efficaces pour arrêter les gouttelettes, par exemple dans les zones proches de la paroi intérieure 2 ou dans la zone radialement interne de la veine 4. L'orientation privilégiée par une structure régulière dans un treillis peut être efficace pour guider les gouttelettes vers les sorties radiales externes 9 d'évacuation et éviter l'accumulation d'huile dans les zones radialement externes de la structure alvéolaire 5, qui peut bloquer l'écoulement de l'air.

Dans un mode de réalisation non représenté, il est également possible de faire varier la texture et la porosité en azimut à l'intérieur de chaque compartiment. Comme pour les effets de force centrifuge dans le sens radial, cela permet de prendre en compte les effets d'accumulation qui peuvent se produire contre la cloison axiale 8 du compartiment qui se trouve en arrière par rapport au sens de rotation.

Ces modes de réalisation permettent d'adapter une structure alvéolaire à la forme de la veine de telle sorte qu'elle maximise le nombre de gouttelettes captées en minimisant les pertes de charge afférentes.

Il faut noter à ce stade que le procédé de fabrication additive tel que la fusion laser d'une poudre métallique impose des contraintes pour que la pièce en cours de fabrication ne s'effondre pas sur elle-même. En particulier, si l'on considère les deux coques 2, 3, délimitant la veine 4, il faut, si l'on fabrique la pièce en remontant verticalement le long de l'axe de symétrie X :
- soit que la pièce 1 soit positionnée dans la machine de façon à ce que les coques 2, 3 ne présentent pas de plans horizontaux suspendus en cours de fabrication ;
- soit concevoir des formes de coques 2, 3 présentant des pentes de l'ordre de 30 à 45° minimum ;
- soit prévoir des structures de soutien, supprimées après fabrication additive, qui supportent les plans horizontaux

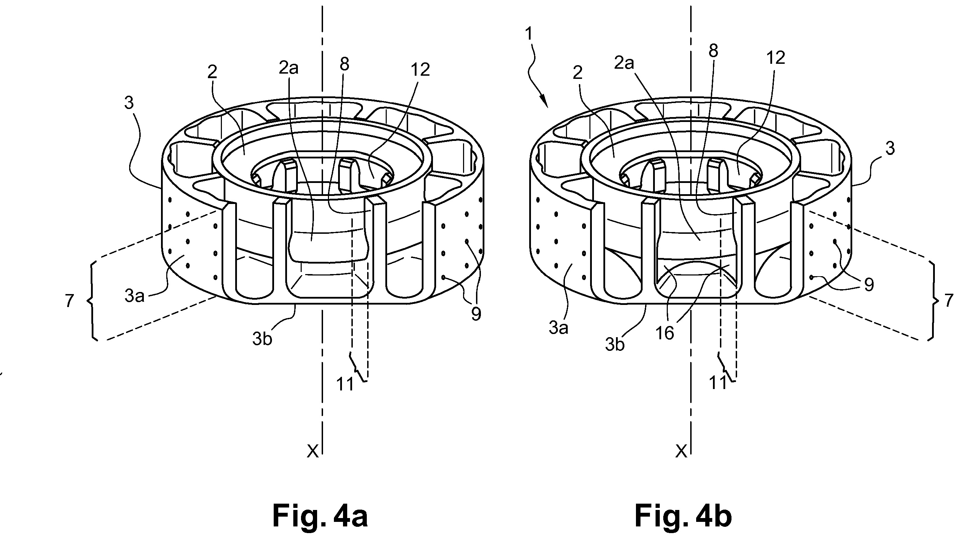

La figure 4a présente, sans la structure alvéolaire 5 pour mieux figurer les coques 2, 3, une forme de pièce imaginée avant la prise en compte des contraintes ci-dessus. On voit que la première coque 2 présente une partie sensiblement annulaire qui forme, au niveau de son extrémité 2a, un plateau horizontal suspendu lors d'un procédé de fabrication additive progressant suivant la direction de l'axe de symétrie X. Ce plateau horizontal peut s'effondrer entre les cloisons axiales transverses 8 qui limitent les compartiments.

Dans un mode de réalisation illustré sur la figure 4b, des voûtes de soutien 16 sont ajoutées à la forme de la figure 4a et fabriquées entre les cloisons axiales 8. Elles se trouvent dans la deuxième partie 11 de la veine, de préférence entre l'espace 17 occupé par la structure alvéolaire 5, non figurée, et la sortie radiale interne 12. Les voûtes 16 permettent de maintenir la partie de la première coque 2 qui se trouverait à l'horizontal entre deux cloisons 8 successives lors de la fabrication. On peut ainsi conserver la forme originale des coques 2, 3, qui a été conçue en compagnie de celle de la structure alvéolaire 5 pour optimiser les performances du dégazeur.

De plus, dans le mode de réalisation présenté, ces voûtes de soutien 16 sont conservées dans la pièce finale 1 au lieu de chercher à les supprimer après fabrication, ce qui risque d'être complexe compte tenu du fait de la présence de la structure alvéolaire.

L'apport de cette solution consiste à transformer une contrainte du procédé de fabrication additive en un avantage concurrentiel grâce au fait que la forme des voûtes de soutien 16 est adaptée pour améliorer la capacité de déshuilage, en minimisant les pertes de charge générées.

En référence à la figure 1, la pièce selon l'invention est utilisée dans un dégazeur qui comprend un pignon 18 de mise en rotation de la pièce, comprenant lui-même un voile 19. Le voile 19 est relié solidairement à la pièce mobile 1 et comprend des ouvertures en regard de l'entrée axiale 6 du mélange dans les compartiments de la veine 4. Cet agencement particulier des ouvertures dans l'entrée axiale 6 et des sorties radiales 9 par rapport au voile 19 du pignon 18 permet d'empêcher toute réintroduction dans la veine 4 d'huile évacuée par les sorties radiales 9. En particulier, l'huile évacuée par les sorties 9, formées par des orifices dans la paroi 3b externe, ne peut pas se diriger vers l'entrée 6 parce que le pignon 18 fait office de mur de séparation. En outre, la rotation du pignon génère un mur d'air qui empêche la circulation d'huile vers les entrées 6. En effet, les dents du pignon 18 brassent l'air au cours de la rotation du pignon, ce qui a pour effet de former un mur d'air qui empêche le passage d'huile vers l'entrée axiale 6.

Le voile 19 est également relié solidairement à un arbre creux 13. L'arbre creux 13 est lui-même relié à la pièce mobile 1 par les colliers 13, 14, des deux coques 2, 3. Il comprend des ouvertures placées en regard de la sortie radiale interne 12 des compartiments de la pièce mobile 1. Comme indiqué par la flèche F1 sur la figure 1, l'air contenant de l'huile entre donc dans la pièce mobile 1 par les ouvertures du voile 19. Par effet de centrifugation, l'huile est évacuée vers l'extérieur de la pièce mobile 1 au travers des sorties radiales 9 comme illustré par les flèches F2. Ensuite, l'air déshuile ayant traversé la structure alvéolaire 7 dans la veine 4 arrive dans l'arbre creux 13 pour être évacué.

En outre, selon un mode de réalisation avantageux non représenté sur les figures, le dégazeur comprend un disque anti-retour qui s'étend perpendiculairement à la paroi externe 3b de l'enceinte de centrifugation 7 et qui obstrue en partie les entrées axiales de manière à empêcher une sortie d'huile au voisinage de la paroi externe par les entrées axiales. Ainsi, l'huile au voisinage de la paroi externe 3b ne peut ressortir de la pièce en rotation par les ouvertures du voile 19 parce qu'elle est bloquée par le disque qui s'étend au voisinage de la paroi externe 3b. Ce disque est par exemple réalisé par une excroissance du voile 19 du pignon 18 au niveau de l'entrée axiale 6.

L'invention ne se limite pas aux seuls modes de réalisation décrits en lien avec les figures. Par exemple, selon d'autres modes de réalisation non représentés, l'espace 17 occupé par la structure alvéolaire 5 peut présenter d'autres géométries à l'intérieur des compartiments de la veine 4 sans remettre en cause le principe de l'invention.

## Revendications

1. Pièce (1) pour un dégazeur centrifuge d'un mélange air/huile de turbomachine, destinée à tourner autour d'un axe de symétrie (X), comprenant une partie structurelle (2, 3) configurée pour délimiter une veine (4) pour le flux dudit mélange, comportant :
- au moins une entrée axiale (6) annulaire dudit mélange air/huile et une sortie radiale interne (12) annulaire, plus proche de l'axe de symétrie (X) que l'entrée axiale (6) et configurée pour évacuer l'air déshuilé ;
- une enceinte de centrifugation (7) circonférentielle s'étendant axialement entre une première extrémité comprenant ladite entrée axiale (6) et une seconde extrémité communiquant avec ladite sortie radiale interne (12) ;
- au moins une sortie radiale d'huile (9) ménagée dans une paroi radialement extérieure (3b), sensiblement annulaire, de l'enceinte de centrifugation (7) et configurée pour pouvoir évacuer l'huile séparée dudit mélange par centrifugation vers l'extérieur du dégazeur ;
comprenant en outre au moins une structure alvéolaire (5), par exemple une mousse ou un treillis, configurée pour filtrer l'huile en laissant passer l'air et occupant au moins un espace (17) dans ladite veine (4) qui ferme la communication entre l'entrée axiale (6) et la sortie radiale interne (12), la partie structurelle (2,3) et la structure alvéolaire (5) étant formées d'une seule pièce par fabrication additive, ledit espace occupé par la structure alvéolaire (5) s'étendant au moins partiellement à l'intérieur de l'enceinte de centrifugation (7), **caractérisée en ce qu'**un espace libre de matériau (16) s'étend axialement dans l'enceinte de centrifugation (7) entre l'entrée axiale (6) et l'espace (17) occupé par la structure alvéolaire (5).

2. Pièce (1) selon la revendication précédente, dans laquelle la partie structurelle comprend une première coque (2) de révolution entourée par une deuxième coque (3) de révolution formant respectivement des parois circonférentielles intérieures et extérieures de la veine, la deuxième coque (3) comprenant une première partie, formant la paroi radialement extérieure (3b) de l'enceinte de centrifugation (7), et une deuxième partie (3a) sensiblement radiale, définissant une limite axiale de la veine (4) opposée à ladite entrée axiale (6).

3. Pièce (1) selon la revendication précédente, dans laquelle la première coque (2) comporte une extrémité axiale (2a) opposée à l'entrée axiale (6) qui ménage, avec la deuxième partie (3a) de la deuxième coque (3), une sortie (10) vers l'axe de symétrie (X) au niveau de la seconde extrémité de l'enceinte de centrifugation (7) et qui est conformée, par exemple en bourrelet ou en plateau circonférentiel arrondi, de manière à maintenir le plus longtemps possible le mélange air/huile sur les plus grands diamètres de la veine (4).

4. Pièce (1) selon la revendication précédente, dans laquelle l'espace (17) occupé par la structure alvéolaire (5) s'étend entre une première surface (5a) transversale à la veine (4) joignant la première coque (2) à la paroi radialement extérieure (3b) dans l'enceinte de centrifugation (7) et une deuxième surface (5b) transversale à la veine (4) joignant la deuxième partie (3a) de la deuxième coque (3) et la première coque (2) au niveau de son extrémité axiale (2a) opposée à l'entrée axiale (6).

5. Pièce (1) selon l'une des revendications 3 et 4, dans laquelle la partie structurelle comprend des cloisons (8) sensiblement axiales reliant la première (2) et la deuxième (3) coque, réparties circonférentiellement et séparant la veine (4) en une pluralité de compartiments agencés radialement autour de l'axe de symétrie (X), chaque compartiment communiquant avec l'entrée axiale (6), la sortie radiale interne (12) et au moins une sortie radiale d'huile (9).

6. Pièce (1) selon l'une des revendications 3 à 5, dans laquelle la partie structurelle comprend des éléments reliant la première (2) et la deuxième (3) coque dans une deuxième partie (11) de la veine (4) mettant l'enceinte de centrifugation (7) en communication avec la sortie radiale interne (12), lesdits éléments étant configurés pour servir de support entre les deux coques au cours d'une fabrication additive de la pièce et pour favoriser l'écoulement de l'air déshuilé dans la deuxième partie (11) de la veine (4).

7. Pièce (1) selon l'une des revendications précédentes dans laquelle la porosité et/ou la texture de la structure alvéolaire (5) varie axialement et/ou radialement dans l'espace (17) qu'elle occupe, de manière à uniformiser les pertes de charge entre les zones proches de la première coque (2), peu soumises à la force centrifuge, et les zones proches de la paroi radialement extérieure (3b), fortement soumises à la force centrifuge, et/ou à optimiser l'évacuation des gouttelettes captées par la structure alvéolaire (5) vers une sortie radiale d'huile (9).

8. Dégazeur centrifuge d'un mélange air/huile de turbomachine comprenant une pièce (1) selon l'une des revendications précédentes, un arbre creux (13) solidaire de ladite pièce et configuré pour recueillir l'air sortant de la sortie radiale interne (12), et un pignon (18) de mise en rotation de l'ensemble.

9. Procédé de réalisation d'une pièce (1) selon l'une des revendications 1 à 7, comprenant une phase de fabrication additive simultanée de la partie structurelle (2, 3, 16) et de la structure alvéolaire (5).

## Patentansprüche

1. Bauteil (1) für einen zentrifugalen Entgaser eines Luft-Öl-Gemischs einer Turbomaschine, das dazu vorgesehen ist, sich um eine Symmetrieachse (X) zu drehen, umfassend einen strukturteil (2, 3), der dazu konfiguriert ist, einen Strom (4) für den Fluss des Gemischs zu begrenzen, umfassend:
- mindestens einen ringförmigen axialen Eingang (6) des Luft-Öl-Gemischs und einen ringförmigen inneren radialen Ausgang (12), näher an der Symmetrieachse (X) als der axiale Eingang (6) und dazu konfiguriert, die entölte Luft abzuführen;
- eine umfängliche Zentrifugierungskammer (7), die sich axial zwischen einem ersten Ende, das den axialen Eingang (6) umfasst, und einem zweiten Ende, das mit dem inneren radialen Ausgang (12) kommuniziert, erstreckt;
- mindestens einen radialen Ölausgang (9), der zwischen einer im Wesentlichen ringförmigen, radial äußeren Wand (3b) der Zentrifugierungskammer (7) eingerichtet ist und dazu konfiguriert ist, das von dem Gemisch durch Zentrifugierung getrennte Öl zur Außenseite des Entgasers abführen zu können;
weiter mindestens eine alveoläre Struktur (5), beispielsweise einen Schaumstoff oder ein Gitter, umfassend, die dazu konfiguriert ist, das Öl durch Durchlassen der Luft zu filtern und die mindestens einen Raum (17) in den Strom (4) einnimmt, der die Kommunikation zwischen dem axialen Eingang (6) und dem inneren radialen Ausgang (12) verschließt, wobei der strukturteil (2, 3) und die alveoläre Struktur (5) durch additive Fertigung aus einem einzigen Stück gebildet sind, wobei der von der alveolären Struktur (5) eingenommene Raum sich zumindest teilweise im Inneren der Zentrifugierungskammer (7) erstreckt,
**dadurch gekennzeichnet, dass** sich ein werkstofffreier Raum (16) axial in der Zentrifugierungskammer (7) zwischen dem axialen Eingang (6) und dem von der alveolären Struktur (5) eingenommenen Raum (17) erstreckt.

2. Bauteil (1) nach dem vorstehenden Anspruch, wobei der strukturteil eine erste Rotationsschale (2) umfasst, die von einer zweiten Rotationsschale (3) umgeben ist, die jeweils innere und äußere Umfangswände des Stroms bilden, wobei die zweite Schale (3) einen ersten Teil, der die radial äußere Wand (3b) der Zentrifugierungskammer (7) bildet, und einen im Wesentlichen radialen, zweiten Teil (3a) umfasst, der eine axiale Grenze des Stroms (4) gegenüber dem axialen Eingang (6) definiert.

3. Bauteil (1) nach dem vorstehenden Anspruch, wobei die erste Schale (2) ein axiales Ende (2a) gegenüber dem axialen Eingang (6) umfasst, das zusammen mit dem zweiten Teil (3a) der zweiten Schale (3) einen Ausgang (10) zur Symmetrieachse (X) am zweiten Ende der Zentrifugierungskammer (7) einrichtet und das derart angepasst ist, beispielsweise als Wulst oder abgerundete umfängliche Platte, dass das Luft-Öl-Gemisch so lange wie möglich auf den größten Durchmessern des Stroms (4) gehalten wird.

4. Bauteil (1) nach dem vorstehenden Anspruch, wobei sich der von der alveolären Struktur (5) eingenommene Raum (17) zwischen einer zur Strom (4) querverlaufenden, ersten Oberfläche (5a), die die erste Schale (2) mit der radial äußeren Wand (3b) in der Zentrifugierungskammer (7) verbindet, und einer zur Strom (4) querverlaufenden, zweiten Oberfläche (5b), die den zweiten Teil (3b) der zweiten Schale (3) und die erste Schale (2) an ihrem axialen Ende (2a) gegenüber dem axialen Eingang (6) verbindet, erstreckt.

5. Bauteil (1) nach einem der Ansprüche 3 und 4, wobei der strukturelle Teil im Wesentlichen axiale Trennwände (8) umfasst, die die erste (2) und die zweite (3) Schale verbinden, umfänglich aufgeteilt sind und der Strom (4) in eine Vielzahl von radial um eine Symmetrieachse (X) eingerichtete Fächer abtrennen, wobei jedes Fach mit dem axialen Eingang (6), dem inneren radialen Ausgang (12) und mindestens einem radialen Ölausgang (9) kommuniziert.

6. Bauteil (1) nach einem der Ansprüche 3 bis 5, wobei der strukturelle Teil Elemente umfasst, die die erste (2) und die zweite (3) Schale in einem zweiten Teil (11) des Stroms (4) verbinden, wodurch die Zentrifugierungskammer (7) mit dem inneren radialen Ausgang (12) in Verbindung gebracht wird, wobei die Elemente dazu konfiguriert sind, während einer additiven Fertigung des Bauteils als Stütze zwischen den zwei Schalen zu dienen und den Abfluss der entölten Luft im zweiten Teil (11) des Stroms (4) zu unterstützen.

7. Bauteil (1) nach einem der vorstehenden Ansprüche, wobei die Porosität und/oder die Textur der alveolären Struktur (5) axial und/oder radial im Raum (17), den sie einnimmt, derart schwankt, dass die Lastverluste zwischen den Bereichen nahe der ersten Schale (2), die der Zentrifugalkraft wenig ausgesetzt sind, und den Bereichen nahe der radial äußeren Wand (3b), die der Zentrifugalkraft stark ausgesetzt sind, angeglichen werden und/oder die Abführung der von der alveolären Struktur (5) eingefangenen Tröpfchen zu einem radialen Ölausgang (9) optimiert wird.

8. Zentrifugaler Entgaser eines Luft-Öl-Gemischs einer Turbomaschine, umfassend ein Bauteil (1) nach einem der vorstehenden Ansprüche, eine Hohlwelle (13), die fest mit dem Bauteil verbunden ist und dazu konfiguriert ist, die aus dem inneren radialen Ausgang (12) austretende Luft zu sammeln, und ein Ritzel (18), um die Anordnung in Drehung zu versetzen.

9. Verfahren zur Herstellung eines Bauteils (1) nach einem der Ansprüche 1 bis 7, umfassend eine Phase der gleichzeitigen additiven Fertigung des strukturteils (2, 3, 16) und der alveolären Struktur (5).

## Claims

1. Component (1) for a turbomachine centrifugal deaerator of an air/oil mixture, intended to rotate around a symmetrical axis (X), comprising a structural part (2, 3) configured to delimit a duct (4) for the flow of said mixture, comprising:
- at least one annular axial inlet (6) of said air/oil mixture and an annular internal radial outlet (12), closer to the symmetrical axis (X) than the axial inlet (6) and configured to evacuate the oil-free air;
- a circumferential centrifugation enclosure (7) extending axially between a first end comprising said axial inlet (6) and a second end communicating with said internal radial outlet (12);
- at least one radial oil outlet (9) arranged in a radially outer wall (3b), substantially annular, of the centrifugation enclosure (7) and configured to be able to evacuate the oil separated from said mixture by centrifugation outwards from the deaerator;
comprising further at least one cellular structure (5), for example a foam or a lattice, configured to filter oil while allowing the air to pass and occupying at least one space (17) in said duct (4) which closes the communication between the axial inlet (6) and the internal radial outlet (12),
the structural part (2, 3) and the cellular structure (5) are formed of a single component by additive manufacture, said space occupied by the cellular structure (5) extending at least partially inside the centrifugation enclosure (7),
**characterised in that** a free space of material (16) extends axially into the centrifugation enclosure (7) between the axial inlet (6) and the space (17) occupied by the cellular structure (5).

2. Component (1) according to the preceding claim, wherein the structural part comprises a first shell (2) of revolution surrounded by a second shell (3) of revolution forming respectively inner and outer circumferential walls of the duct, the second shell (3) comprising a first part, forming the radially outer wall (3b) of the centrifugation enclosure (7), and a second substantially radial part (3a), defining an axial limit of the duct (4) opposite said axial inlet (6).

3. Component (1) according to the preceding claim, wherein the first shell (2) comprises an axial end (2a) opposite the axial inlet (6) which arranges, with the second part (3a) of the second shell (3), an outlet (10) towards the symmetrical axis (X) at the level of the second end of the centrifugation enclosure (7) and which is shaped, for example in a bulge or in a rounded circumferential plate, so as to maintain, for as long as possible, the air/oil mixture over the largest diameters of the duct (4).

4. Component (1) according to the preceding claim, wherein the space (17) occupied by the cellular structure (5) extends between a first surface (5a) transversal to the duct (4) joining the first shell (2) to the radially outer wall (3b) in the centrifugation enclosure (7) and a second surface (5b) transversal to the duct (4) joining the second part (3a) of the second shell (3) and the first shell (2) at the level of its axial end (2a) opposite the axial inlet (6).

5. Component (1) according to one of claims 3 and 4, wherein the structural part comprises substantially axial partitions (8) connecting the first (2) and the second (3) shell, distributed circumferentially and separating the duct (4) into a plurality of compartments arranged radially about the symmetrical axis (X), each compartment communicating with the axial inlet (6), the internal radial outlet (12) and at least one radial oil outlet (9).

6. Component (1) according to one of claims 3 to 5, wherein the structural part comprises elements connecting the first (2) and the second (3) shell in a second part (11) of the duct (4) putting the centrifugation enclosure (7) in communication with the internal radial outlet (12), said elements being configured to serve as a support between the two shells during an additive manufacture of the component and to favour the flow of the oil-free air in the second part (11) of the duct (4).

7. Component (1) according to one of the preceding claims, wherein the porosity and/or the texture of the cellular structure (5) changes axially and/or radially in the space (17) that it occupies, so as to standardise the load losses between the zones close to the first shell (2), little subjected to the centrifugal force, and the zones close to the radially outer wall (3b), highly subjected to the centrifugal force, and/or to optim ise the evacuation of the droplets captured by the cellular structure (5) towards a radial oil outlet (9).

8. Turbomachine centrifugal deaerator of an air/oil mixture comprising a component (1) according to one of the preceding claims, a hollow shaft (13) integral with said component and configured to receive the air exiting the internal radial outlet (12), and a rotating pinion (18) of the assembly.

9. Method for producing a component (1) according to one of claims 1 to 7, comprising a simultaneous additive manufacture phase of the structural part (2, 3, 16) and of the cellular structure (5).
